# EUROPEAN PATENT SPECIFICATION

(11) **EP 3 778 201 B1**
(45) Date of publication and mention of the grant of the patent: **26.10.2022**
(21) Application number: 19912963.6
(22) Date of filing: 30.01.2019
(51) Int. Cl.: B29C 70/44, B01J 3/04, B29C 35/04, B29C 43/12

(54) **AUTOCLAVE MOLDING APPARATUS**
AUTOKLAVFORMVORRICHTUNG
APPAREIL DE MOULAGE EN AUTOCLAVE

(43) Date of publication of application: 17.02.2021
(73) Proprietor: Ashida MFG Co., Ltd., Ikoma-shi, Nara 630-0101 (JP)
(72) Inventor: YAMAMOTO Yoshiaki, Ikoma-shi, Nara 630-0101 (JP); ASHIDA Takeshi, Ikoma-shi, Nara 630-0101 (JP)
(74) Representative: Horn Kleimann Waitzhofer Patentanwälte PartG mbB
(86) International application number: PCT/JP2019/003198
(87) International publication number: WO 2020/157869

(56) References cited:
- EP-A1- 2 457 708
- EP-A1- 3 067 189
- JP-A- S6 319 897
- JP-A- 2008 501 555
- JP-A- 2012 153 133
- JP-A- 2016 168 684

## Description

### TECHNICAL FIELD

The present invention relates to an autoclave molding apparatus for use in forming composite material molded articles used in aircraft, automobile and other general industries.

### BACKGROUND ART

A molded article having a desired cross-sectional shape can be obtained by a known technique, in which sheets of prepreg, i.e., a composite material produced by impregnating a reinforcing material, such as carbon fiber, aramid fiber, or glass fiber, with a thermosetting resin matrix, such as epoxy resin or phenol resin, are heated and compression-molded. Carbon fiber and glass fiber have high elasticity. Therefore, these fibers are formed into thin fiber sheets, which are laminated such that the fibers in the adjacent sheets are oriented in different directions to obtain a composite material. Since lightweight and strong products can be obtained from such composite materials, these materials are widely used in aircraft, automobile and other general industries. A composite material having a thermosetting resin matrix is soft at room temperature, but when it is heated, it is cured at elevated temperatures above a predetermined temperature while generating heat of reaction.

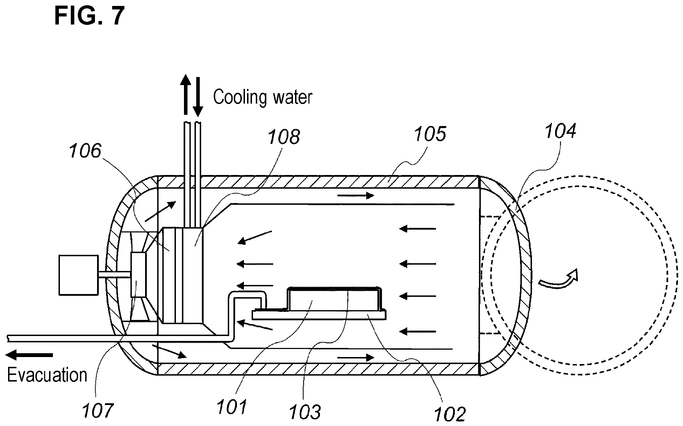

An autoclave apparatus disclosed in Patent Literature 1 (Japanese Unexamined Patent Application Publication No. 2009-51074) below is used as an apparatus for molding these composite materials. As shown in FIG. 7, a composite material 101 is sealed together with a molding tool 102 in a heat and pressure resistant vacuum bag 103 and then the entire assembly is placed in a cylindrical vessel 105 through a door 104. The air in the cylindrical vessel 105 is heated by a heater 106 to raise the temperature of the composite material 101 to a predetermined temperature. The pressure increases as the temperature increases. If higher pressure is needed, a compressed gas is introduced from outside (not shown) to generate a pressure difference between inside and outside of the vacuum bag 103. Due to this pressure difference, the composite material 101 is pressed against the molding tool 102 and formed into the shape of the molding tool 102. During this molding process, the heating gas is circulated by a fan 107 so that the composite material 101 can be heated uniformly. The composite material 101 is maintained at the predetermined temperature for a predetermined period of time until it is cured and the molding process is completed. Then, the composite material 101 is cooled. Cooling water is supplied from outside to cool the circulating gas through a cooler 108 and thereby cool the composite material 101.

However, since heat is transferred through the gas in both the heating process and the cooling process, these processes take a lot of time, which results in a decrease in productivity. This is a problem to be solved.

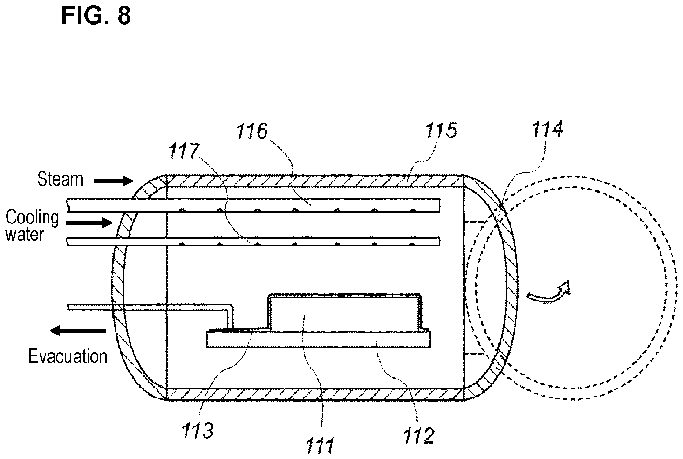

In order to solve this problem, an autoclave apparatus disclosed in Patent Literature 2 (Japanese Unexamined Patent Application Publication No. 2012-153133) below is used. This apparatus is described with reference to FIG. 8. In this apparatus, steam is used as a heating medium instead of circulating air. A composite material 111 is sealed together with a molding tool 112 in a vacuum bag 113 and then the entire assembly is placed in a cylindrical vessel 115 through a door 114. High-temperature and high-pressure steam is supplied into the cylindrical vessel 115 through a steam supply pipe 116. The steam flows directly to the vacuum bag 113, condenses on the top surface of the vacuum bag 113, the bottom surface of the molding tool 112, etc., releases a large amount of heat of condensation to the top surface of the vacuum bag 113 and the bottom surface of the molding tool 112, and thereby raises the temperature of the composite material 111 by heat transfer. Concurrently, due to a pressure difference between the steam and the interior of the vacuum bag 113, the composite material 111 is brought into close contact with the molding tool 112 and thus molded. When the steam condenses into water, its volume is reduced to about one hundredth or less. Therefore, fresh steam flows into a region where the condensation occurs, and the composite material 111 and the molding tool 112 are heated rapidly and at a uniform temperature. Therefore, a device for circulating the steam, such as a fan, is not needed. The composite material 111 is maintained at a predetermined temperature until it is cured and the molding process is completed. Then, the composite material 111 is cooled. Cooling is performed by spraying externally supplied cooling water through a cooling water supply pipe 117 to directly cool the vacuum bag 113. Thereby, the time required for the heating process and the cooling process can be reduced significantly.

### Citation List

### Patent Literature

Patent Literature 1: Japanese Unexamined Patent Application Publication No. JP 2009-51074A
Patent Literature 2: Japanese Unexamined Patent Application Publication No. JP 2012-153133A (and its corresponding application EP 2 457 708 Al) discloses an autoclave molding apparatus for use in molding a composite material composed of a fibrous base material and a matrix and sealed together with a molding tool in a vacuum bag, using steam for heating and compressing the composite material, with a condensed water holder configured to hold condensed water generated during the heating.

### SUMMARY OF INVENTION

### TECHNICAL PROBLEM

As described above, heating by steam allows rapid heating and is suitable for molded articles with complex shapes. However, in order to improve this autoclave molding apparatus, it would be necessary to solve the following problems.

Composite materials generate heat of curing reaction (hereinafter called "curing heat") while curing. Thermosetting resins as matrices of composite materials have low heat conductivity, while fibers as reinforcing materials have higher heat conductivity. Therefore, the heat conductivity in the thickness direction as the lamination direction is lower than that in the planar direction as the fiber direction. Since heat of condensation of steam is transferred mainly in the thickness direction, a temperature difference occurs in the thickness direction of the composite material. At the start of heating, due to the heat of condensation of steam, the surface temperature of the composite material is higher than the internal temperature thereof. As curing proceeds, due to the curing heat generated in the interior, the internal temperature becomes higher. In the molding process, not only the surface but also the interior must be below a predetermined temperature or lower. If the temperature of the composite material is too high, sufficient strength cannot be obtained.

In view of the above, heat must be adequately dissipated from the surface of the vacuum bag and the molding tool in the curing process. In the steam environment, heating is a transfer of heat of condensation of steam and thus has high performance in temperature rise, while heat dissipation is another type of heat transfer, i.e., convection of heat of steam. Due to the absence of a fan for circulating the steam, the convection velocity of the steam is low. In addition, the heat conductivity of the steam is low. As a result, the heat transfer is significantly reduced. Therefore, the surface temperature of the composite material when it generates heat while curing is higher than that in a conventional autoclave in which the composite material is heated by a gas. As a result, it is difficult to maintain the temperature of the composite material at a predetermined temperature or lower.

Accordingly, it is a primary object of the present invention to provide an autoclave molding apparatus capable of effectively reducing the overshoot of the temperature of a composite material caused by poor dissipation of curing heat in a curing process in which steam is used as a heating and compressing medium, and thereby capable of producing a composite material molded article having uniform and sufficient strength.

### SOLUTION TO PROBLEM

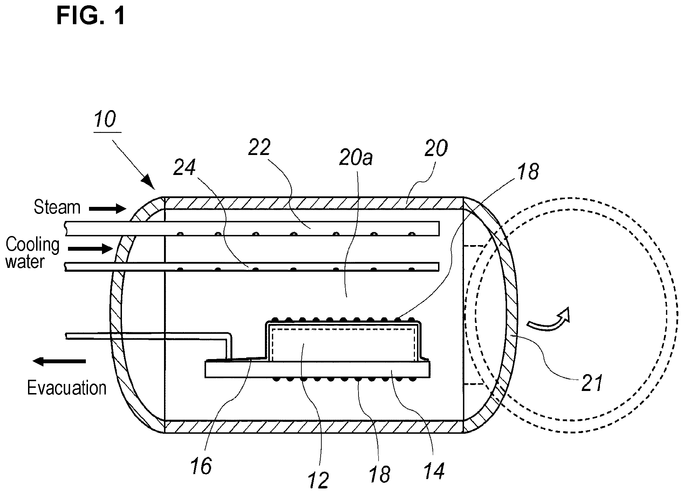

In order to solve the above problems, the present invention provides an autoclave molding apparatus 10 configured as shown, for example, in FIG. 1 to FIG. 6.

More specifically, in the autoclave molding apparatus 10 for use in molding a composite material 12 composed of a fibrous base material and a matrix and sealed together with a molding tool 14 in a vacuum bag 16, using steam for heating and compressing the composite material 12, a condensed water holder 18 configured to hold condensed water generated during the heating is mounted on at least a portion of the vacuum bag 16 or at least a portion of the molding tool 14, or the condensed water holders 18 are mounted on at least a portion of the vacuum bag 16 and at least a portion of the molding tool 14.

According to the present invention, a portion of a large amount of condensed water that is generated on the surface of the vacuum bag 16 and/or the exposed surface of the molding tool 14 when the composite material 12 and the molding tool 14 are heated is held in the condensed water holder 18, and heat generated during the subsequent curing of a thermosetting resin is used as latent heat of evaporation of the condensed water, so as to allow dissipation of heat with a small temperature difference.

As a result, not only an increase in the surface temperature of the composite material 12 but also an increase in the internal temperature of the composite material 12 can be suppressed, and a composite material 12 molded article having uniform and sufficient strength can be obtained.

Preferably, in the present invention, the condensed water holder 18 is made of at least one selected from the group consisting of a porous material 18A, a mesh material 18B obtained by knitting fibers, wrinkles 18C of the vacuum bag 16 that are formed when the composite material 12 is sealed together with the molding tool 14 in the vacuum bag 16, and a recessed portion 18D formed on a surface of the molding tool 14 opposite to a surface thereof on which the composite material 12 is placed.

Preferably, the present invention further includes particular components to be described in the following embodiments.

### ADVANTAGEOUS EFFECTS OF THE INVENTION

According to the present invention, it is possible to provide an autoclave molding apparatus capable of effectively reducing the overshoot of the temperature of a composite material caused by poor dissipation of curing heat in a curing process in which steam is used as a heating and compressing medium, and thereby capable of producing a composite material molded article having uniform and sufficient strength.

### BRIEF DESCRIPTIN OF DRAWINGS

FIG. 1 is a schematic diagram of an autoclave molding apparatus according to an embodiment of the present invention.
FIG. 2 is a model diagram showing temperature changes at different positions during operation of the autoclave molding apparatus according to the present invention.
FIG. 3 is a perspective view of an example of a condensed water holder according to the present invention.
FIG. 4 is a schematic view of another example of the condensed water holder according to the present invention.
FIG. 5 is a cross-sectional view of another example of the condensed water holder according to the present invention.
FIG. 6 is a cross-sectional view of another example of the condensed water holder according to the present invention.
FIG. 7 is a schematic diagram of a conventional autoclave molding apparatus.
FIG. 8 is a schematic diagram of a conventional steam heating type autoclave molding apparatus.

### DESCRIPTION OF EMBODIMENTS

Embodiments of the present invention will be described with reference to drawings. FIG. 1 is a schematic diagram of an autoclave molding apparatus 10 according to an embodiment of the present invention. As shown in this figure, when a composite material 12 made of a fibrous base material impregnated with a thermosetting resin matrix and placed on a molding tool 14 is sealed in a vacuum bag 16 and the entire assembly is placed in a molding chamber 20a in a cylindrical vessel 20, the autoclave molding apparatus 10 of the present embodiment is configured to mold the composite material 12 by heating and compression.

In the autoclave molding apparatus 10 of the present embodiment, steam of a predetermined temperature suitable for molding the composite material 12 is supplied, as a heat source, from a steam supply unit 22 to the molding chamber 20a. The vacuum bag 16 is evacuated by a vacuum pump (not shown) placed outside the molding chamber 20a. Due to a pressure difference between the interior of the molding chamber 20a and that of the vacuum bag 16, the composite material 12 is pressed against the molding tool 14 and formed into the shape of the molding tool 14. In FIG. 1, the reference numeral 21 refers to a door to open or close the molding chamber 20a when the assembly including the composite material 12 is placed thereinto or the resulting molded article of the composite material 12 is removed therefrom.

The condensed water holders 18 having heat resistance to a temperature of 100°C or higher (more preferably, 120°C or higher) and made of a water holding material are mounted on the top surface of the vacuum bag 16 and the bottom surface of the molding tool 14. The condensed water holders 18 each have a shape with an opening large enough to supply steam, which is supplied from a steam supply unit 22 for heating, to the surface of the vacuum bag 16 and the surface of the molding tool 14 (the condensed water holder 18 will be described in detail later). The steam introduced into the molding chamber 20a condenses on the low-temperature surfaces of the vacuum bag 16 and the molding tool 14 and releases a large amount of heat of condensation to the vacuum bag 16 and the molding tool 14. This heat is transferred to the composite material 12 by heat transfer, and thereby raises the temperature of the composite material 12. When the steam condenses into water, its volume is reduced to about one hundredth or less, and fresh steam is further supplied. Therefore, compared to heating by circulation of the air or the like, the steam spreads more rapidly, and as a result, the vacuum bag assembly can be heated through all surfaces exposed to the steam. In addition, since an enormous amount of heat is transferred when the steam condenses, heating can be achieved at a uniform temperature and with a small temperature difference between the steam and the surface.

The steam condenses into water, and the condensed water is held in the condensed water holder 18. The amount of water that can be held in the condensed water holder 18 is proportional to its volume. Therefore, when the amount of the condensed water exceeds the water holding capacity, the excess water accumulates on the vacuum bag 16. If the thickness of the accumulated condensed water increases, it serves as a thermal resistance and reduces transfer of condensation heat. However, since the condensed water holder 18 for practical use is not very thick, it has little effect on the transfer of condensation heat. In order to prevent the thickness of the accumulated condensed water from increasing, it is also effective to tilt the composite material 12 and the molding tool 14 when they are placed in the apparatus.

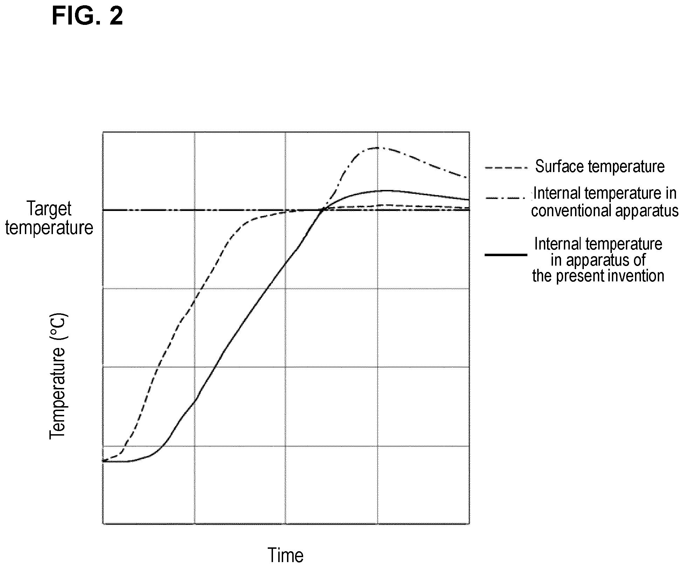

FIG. 2 is a model diagram showing temperature changes at different positions of the composite material 12 during heating and molding. A dotted line indicates a change in the surface temperature of the composite material 12, a dash-dot line indicates a change in the internal temperature of the composite material 12 placed in a conventional autoclave molding apparatus (conventional art), and a solid line indicates a change in the internal temperature of the composite material 12 placed in the autoclave molding apparatus of the present invention (the apparatus of the present invention).

When the composite material 12 is heated and compressed to be formed into a desired shape using the autoclave molding apparatus 10 of the present invention, the surface temperature of the composite material 12 increases as the ambient temperature in the molding chamber 20a increases, but the internal temperature thereof increases with a time lag after the ambient temperature increases (see FIG. 2). This is because the thermal conductivity of the composite material 12 is lower than that of the molding tool 14. Therefore, the thicker the composite material 12 is, the longer the time lag of the temperature rise is.

Next, when the temperature of the molding chamber 20a reaches a target temperature, the amount of the steam supplied from the steam supply unit 22 is controlled to maintain the temperature inside the molding chamber 20a constant. The surface temperature of the composite material 12 is approximately equal to the ambient temperature of the molding chamber 20a. On the other hand, the internal temperature of the composite material 12 increases with a considerable time lag. The composite material 12 begins to cure when it is heated to a curing reaction temperature and generates heat of curing reaction. This curing reaction heat accelerates an increase in the internal temperature, and as the curing reaction proceeds, the internal temperature exceeds the surface temperature.

Here, the molding chamber of the conventional steam heating type autoclave molding apparatus is almost filled with steam. Without a steam circulating means, the heat of the vacuum bag 113 and the molding tool 112 is dissipated by natural convection of the steam, and the internal temperature of the composite material 111 far exceeds and overshoots the ambient temperature of the molding chamber (which is almost equal to the surface temperature of the composite material 12), as indicated by a dash-dot line in FIG. 2. Therefore, the desired physical properties may not be obtained at the internal temperature in the conventional apparatus shown in FIG. 2.

In contrast, in the autoclave molding apparatus 10 of the present embodiment, the condensed water is held in the condensed water holder 18, and therefore the curing heat of the composite material 12 heats the condensed water and causes it to evaporate. Since the curing heat of the composite material 12 is thus consumed as the latent heat of evaporation of the condensed water, the heat of the composite material 12 can be dissipated with a small temperature difference. As indicated by a solid line in FIG. 2, the internal temperature of the composite material 12 does not far overshoot the target temperature, and the resulting molded article obtained from the composite material 12 can have desired physical properties (such as strength).

It should be noted that when the composite material 12 containing another thermosetting resin is used, the same effect can be obtained even if the temperature and pressure of the steam are changed depending on the curing temperature of the resin. The amount of condensed water that the condensed water holder 18 can hold can be easily obtained from the amount of heat required for curing the composite material 12 and the latent heat of evaporation of the steam.

When the above-mentioned curing process is completed, cooling water falls down onto the composite material 12 from a cooling water supply unit 24 to cool it. It should be noted that even if another method is employed in the cooling process, the same effect can be obtained in the present invention.

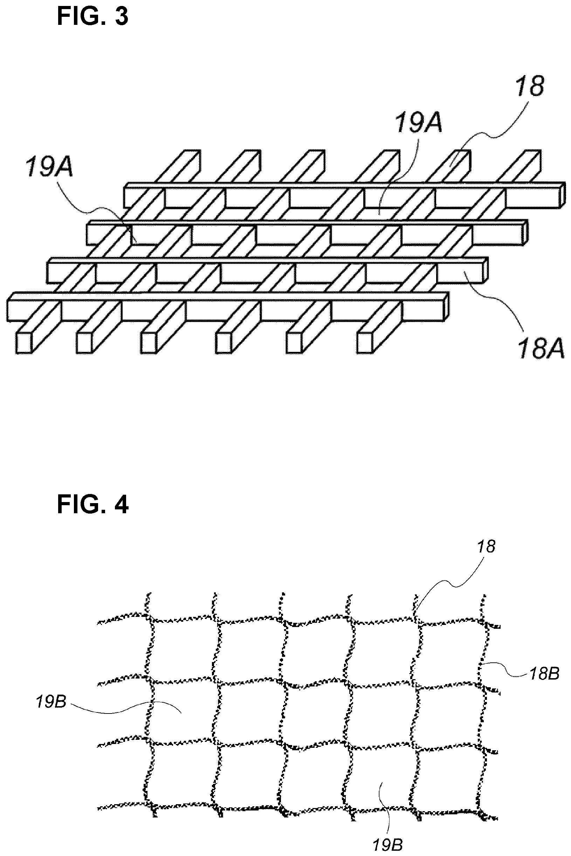

FIG. 3 is a schematic view of the condensed water holders 18 mounted on the top surface of the vacuum bag 16 and the bottom surface of the molding tool 14 (i.e. an exposed surface of the molding tool 14 opposite to a surface on which the composite material 12 is placed) in the autoclave molding apparatus 10 of the present embodiment.

These condensed water holders 18 are made of a porous material 18A, e.g., a metal such as aluminum, iron, or iron alloy, or a heat-resistant resin such as polyester or nylon. The condensed water can be held in the pores. Here, when a metal is used as the porous material 18A, a metal material having a rough surface obtained by blasting can be suitably used (as the porous material 18A).

The porous material 18A of the condensed water holder 18 is a lattice of rods with wide openings 19A, so that the steam is more likely to come into contact with the surface of the vacuum bag 16 and the exposed surface of the molding tool 14. The condensed water holder 18 having such a shape has stiffness high enough to prevent accidental detachment from a surface facing downward in the gravity direction, like the bottom surface (exposed surface) of the molding tool 14, when it is mounted on such a downwardly facing surface. If the condensed water holder 18 cannot be attached to the bottom surface of the molding tool 14 due to the lack of stiffness, it can be attached to the molding tool 14 with an attachment member or the like.

The condensed water holder 18 is not limited to that configured as described above as long as it can hold condensed water effectively. For example, the condensed water holder 18 may be mounted on either the top surface of the vacuum bag 16 or the bottom surface of the molding tool 14. The condensed water holder(s) 18 do not necessarily have to be mounted on the entire top surface of the vacuum bag 16 and/or the entire bottom surface of the molding tool 14, and may be mounted on only a predetermined portion of the top surface and/or a predetermined portion of the bottom surface.

Not only the mounting area of the condensed water holder 18 may be modified as described above, but also the form thereof may be modified in the following way.

FIG. 4 is a schematic view of the condensed water holder 18 according to another embodiment (a second embodiment) of the present invention. This condensed water holder 18 is made of a mesh material 18B obtained by knitting fibers of a heat-resistant fibrous material capable of holding condensed water, for example, a synthetic fiber such as polyester or nylon, a hydrophilic natural fiber such as cotton or linen, or a glass fiber. Such a mesh material has openings 19B through which steam can pass easily. The amount of supplied water can be easily controlled by changing the diameter of the fibers of the fibrous material, for example.

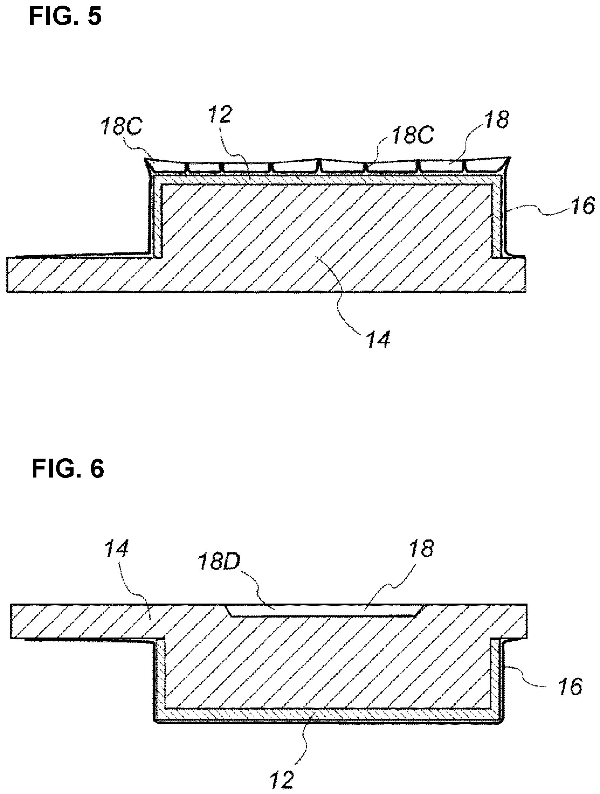

FIG. 5 is a cross-sectional view of the condensed water holder 18 according to another embodiment (a third embodiment) of the present invention.

The composite material 12 made of a fibrous base material impregnated with a thermosetting resin matrix is sealed together with a molding tool 14 in the vacuum bag 16. The size of the vacuum bag 16 used is slightly larger than that of the assembly covered by the bag 16 so that the bag 16 can enclose the resulting molded article having a shape conforming to the shape of the molding tool. Therefore, wrinkles 18C are formed on the surface of the vacuum bag 16 and prevent the inner surface of the vacuum bag 16 from being closely contact with the surface of the composite material 12 and the surface of the molding tool 14. When the vacuum bag 16 is sealed, the wrinkles 18C are formed to have a shape for capturing the condensed water. The height of the wrinkles is determined based on the amount of water to be held.

The condensed water generated during heating is accumulated on the vacuum bag 16, and when the amount of the condensed water exceeds a predetermined value, it overflows the ridges of the wrinkles 18C. Therefore, the thickness of the condensed water is not large and thus the high efficiency of heat transfer during condensation can be maintained. When heat is generated during curing, the condensed water thus held evaporates and an increase in the temperature of the composite material 12 is suppressed.

FIG. 6 is a cross-sectional view of the condensed water holder 18 according to another embodiment (a fourth embodiment) of the present invention.

The composite material 12 made of a fibrous base material impregnated with a thermosetting resin matrix is sealed together with a molding tool 14 in the vacuum bag 16. A recessed portion 18D to serve as the condensed water holder 18 is preformed on a surface (top surface) of the molding tool 14 opposite to a surface on which the composite material 12 is placed. In the present embodiment, the assembly is disposed such that the surface of the composite material 12 faces downward in the gravity direction.

The condensed water generated during heating is accumulated in the recessed portion 18D. When the amount of the condensed water exceeds a predetermined value, it overflows from the recessed portion 18D. Therefore, the thickness of the condensed water is not large and thus the high efficiency of heat transfer during condensation can be maintained. When heat is generated during curing, the condensed water thus held evaporates, the molding tool 14 is cooled, and an increase in the temperature of the composite material 12 is suppressed by heat transfer.

As described above, since the condensed water holder(s) 18 configured to hold the condensed water generated during heating is mounted on at least a portion of the surface of the vacuum bag 16 and/or at least a portion of the surface of the molding tool 14, a portion of the condensed water generated during heating is held therein. Then, using the subsequently generated curing heat of the composite material 12 for the evaporation of the condensed water, an increase in the temperature of the composite material 12 is suppressed and a composite material 12 molded article having sufficient strength can be obtained.

### LIST OF REFERENCE NUMERALS

10: Autoclave molding apparatus
12: Composite material
14: Molding tool
16: Vacuum bag
18: Condensed water holder
18A: Porous material
18B: Mesh material
18C: Wrinkles (of vacuum bag)
18D: Recessed portion
20: Cylindrical vessel
22: Steam supply unit
24: Cooling water supply unit

## Claims

1. An autoclave molding apparatus for use in molding a composite material (12) composed of a fibrous base material and a matrix and sealed together with a molding tool (14) in a vacuum bag (16), using steam for heating and compressing the composite material (12), **characterized by**
a condensed water holder (18) configured to hold condensed water generated during the heating is mounted on at least a portion of the vacuum bag (16) or at least a portion of the molding tool (14), or the condensed water holders (18) are mounted on at least a portion of the vacuum bag (16) and at least a portion of the molding tool (14).

2. The autoclave molding apparatus according to claim 1, wherein the condensed water holder (18) is made of a porous material (18A).

3. The autoclave molding apparatus according to claim 1, wherein the condensed water holder (18) is made of a mesh material (18B) obtained by knitting fibers.

4. The autoclave molding apparatus according to claim 1, wherein the condensed water holder (18) is composed of wrinkles (18C) of the vacuum bag (16) that are formed when the composite material (12) is sealed together with the molding tool (14) in the vacuum bag (16).

5. The autoclave molding apparatus according to claim 1, wherein the condensed water holder (18) is a recessed portion (18D) formed on a surface of the molding tool (14) opposite to a surface thereof on which the composite material (12) is placed.

## Patentansprüche

1. Autoklav-Pressformvorrichtung zum Pressformen eines Verbundmaterials (12) aus einem faserförmigen Basismaterial und einer Matrix, das mit einem Formwerkzeug (14) in einer Vakuumtasche (16) versiegelt ist, unter Verwendung von Dampf zum Erhitzen und Komprimieren des Verbundmaterials (12),
wobei eine Kondenswasser-Halteeinrichtung (18) zum Halten von Kondenswasser, welches während des Erhitzens erzeugt wird, auf zumindest einem Teil der Vakuumtasche (16) oder zumindest einem Teil des Formwerkzeugs (14) vorgesehen ist, oder solche Kondenswasser-Halteeinrichtungen (18) auf zumindest einem Teil der Vakuumtasche (16) oder zumindest einem Teil des Formwerkzeugs (14) vorgesehen sind.

2. Autoklav-Pressformvorrichtung gemäß Anspruch 1, wobei die Kondenswasser-Halteeinrichtung (18) aus einem porösen Material (18A) ist.

3. Autoklav-Pressformvorrichtung gemäß Anspruch 1, wobei die Kondenswasser-Halteeinrichtung (18) aus einem Maschenmaterial (18B) ist, welches durch die Vermaschung von Fasern erhalten ist.

4. Autoklav-Pressformvorrichtung gemäß Anspruch 1, wobei die Kondenswasser-Halteeinrichtung (18) aus Falten (18C) der Vakuumtasche (16) ist, die gebildet werden, wenn das Verbundmaterial (12) zusammen mit dem Formwerkzeug (14) in der Vakuumtasche (16) versiegelt wird.

5. Autoklav-Pressformvorrichtung gemäß Anspruch 1, wobei die Kondenswasser-Halteeinrichtung (18) eine Ausnehmung (18D) ist, die auf einer Oberfläche des Formwerkzeugs (14)
gegenüber einer Oberfläche desselben, auf der das Verbundmaterial (12) platziert wird, gebildet ist.

## Revendications

1. Appareil de moulage en autoclave destiné à être utilisé pour mouler un matériau composite (12) composé d'un matériau de base fibreux et d'une matrice et scellé conjointement avec un outil de moulage (14) dans un sac sous vide (16), au moyen de vapeur destinée à chauffer et à compresser le matériau composite (12), **caractérisé en ce que**
un dispositif de rétention d'eau de condensation (18) configuré pour retenir de l'eau de condensation générée pendant la chauffe est monté sur au moins une partie du sac sous vide (16) ou sur au moins une partie de l'outil de moulage (14), ou les dispositifs de rétention d'eau de condensation (18) sont montés sur au moins une partie du sac sous vide (16) et sur au moins une partie de l'outil de moulage (14).

2. Appareil de moulage en autoclave selon la revendication 1, dans lequel le dispositif de rétention d'eau de condensation (18) est constitué d'un matériau poreux (18A).

3. Appareil de moulage en autoclave selon la revendication 1, dans lequel le dispositif de rétention d'eau de condensation (18) est constitué d'un matériau maillé (18B) obtenu par un tricotage de fibres.

4. Appareil de moulage en autoclave selon la revendication 1, dans lequel le dispositif de rétention d'eau de condensation (18) est composé de plis (18C) du sac sous vide (16) qui sont formés lorsque le matériau composite (12) est scellé conjointement avec l'outil de moulage (14) dans le sac sous vide (16).

5. Appareil de moulage en autoclave selon la revendication 1, dans lequel le dispositif de rétention d'eau de condensation (18) est une partie évidée (18D) formée sur une surface de l'outil de moulage (14) à l'opposé de sa surface sur laquelle est placé le matériau composite (12).
